# EUROPEAN PATENT SPECIFICATION

(11) **EP 3 291 955 B1**
(45) Date of publication and mention of the grant of the patent: **13.02.2019**
(21) Application number: 15851652.6
(22) Date of filing: 25.12.2015
(51) Int. Cl.: B29C 33/72, B29D 30/06, B08B 3/12

(54) **METHOD FOR CLEANING A FULL-MOLD OF VEHICLE TIRES**
VERFAHREN ZUR REINIGUNG EINER VOLLFORM VON FAHRZEUGREIFEN
PROCÉDÉ DE NETTOYAGE DE MOULES PLEINS POUR PNEUMATIQUES DE VÉHICULE

(30) Priority: 25.12.2014 TR 201415810
(43) Date of publication of application: 14.03.2018
(73) Proprietor: Lang Yuzer Otomotiv Yan Sanayi ve Ticaret Anonim Sirketi, 59501 Cerkezkoy/Tekirdag (TR)
(72) Inventor: YUSER, Ismet, 59501 Çerkezkoy/Tekirdag (TR); KOSE, Mustafa, 59501 Çerkezkoy/Tekirdag (TR); AL, Görkem Anil, 59501 Çerkezkoy/Tekirdag (TR); TURKOGLU, Ismail, 59501 Cerkezkoy/Tekirdag (TR); YUZER, Mehmet, 59501 Çerkezkoy/Tekirdag (TR)
(74) Representative: Inal, Aysegul Seda
(86) International application number: PCT/TR2015/000388
(87) International publication number: WO 2016/105306

(56) References cited:
- WO-A1-95/11764
- WO-A1-2010/094454
- US-B1- 6 615 852

## Description

### TECHNICAL FIELD

The invention is related to a method for cleaning the full-molds having profile such as segment used in the production of vehicle tires.

### TECHNICAL BACKGROUND

There are numerous ventilation holes providing gas vacation from the molds and forming outer profiles of the vehicle tyres. These holes have moving valves inside thereof. ultrasonic cleaning methods are used when cleaning of such precision molds. For example, U.S. Patent No. US2011298157A1 discloses a cleaning method as the molds having profiles are taken in a pre-cleaning and a cleaning chamber one after the other, where a rinsing bath is implemented between these two chambers. After implementation of cleaning ,valves are checked whether moving or not by ultrasound examining with provided relaxation that placed on air ventilation opening of the profile patterns in the first cleaning chambers. Then, Subsequently profile molds are need to be clean again. This method requires an expensive investment for the cleaning of the mold. WO 2010/094454 A1 discloses a method involving cleaning profile forms with a rinsing-solution by applying ultrasounds, where the profile forms run through pre-cleaning and primary cleaning chambers. The profile forms between the pre-cleaning and primary cleaning chambers are rinsed in a rinsing bath.

### BRIEF DESCRIPTION OF THE INVENTION

The aim of the invention is to reduce the cost of cleaning process by ultrasonic method for full-mold of vehicle tire having profiles.

The invention to achieve said object is a cleaning method for production of vehicle tire full-molds having profile.

Acccording to the invention the contaminated full-mold is taken a pre-treatment with at least one ultrasonic cleaning apparatus, so it provided budging of the contamination is occurred in the valves at the air ventilation openings of the full-molds having profile. The invention comprises the process steps where cleaned mold is re-cleaned in a first cleaning station by putting to dry ice process, and where cleaning of the full-mold with multiple number of ultrasonic devices by immersing into a cleaning liquid in a second cleaning station, rinsing by taken in to a rinsing station, putting to another process by taken in to a passivation station, and drying by taken in to a drying station.

A preferred embodiment of the invention comprises the step of process as the depurated full-mold is suspended on a rack moved by a propulsion driver within a basket in a cabinet having cleaning liquid at the second cleaning station.

According to the invention comprises a washing of process as step of process via spraying from at least one jet, preferably multiple jets onto the depurated full-mold at the rinsing station.

A preferred embodiment of the invention comprises the step of process as depurated full-mold is taken into a cabinet for a process at the first cleaning station.

A preferred embodiment of the invention comprises the step of process as cleaning of the depurated full-mold in an open environment (without taken into a cabinet) for a process at the first cleaning station.

A preferred embodiment of the invention has a microprocessor control unit which operates the steps of process at the said cleaning stations by adjusting the value amounts of the temperature, pressure, time, ultrasonic wave and movement.

A preferred embodiment of the invention has a PLC program which operates the steps of process at the said cleaning stations by adjusting the value amounts of the temperature, pressure, time, ultrasonic wave and movement.

### DESCRIPTION OF THE FIGURES

The additional features and advantages of the invention are disclosed embodiments examples referenced in following drawings.

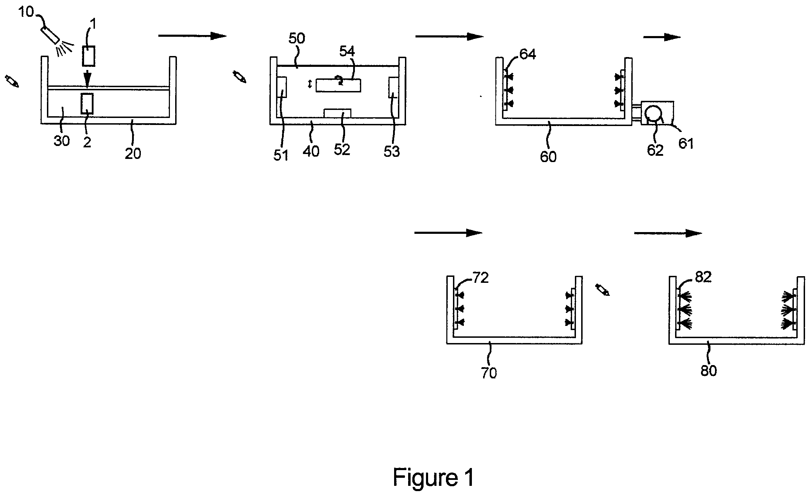

Figure 1 shows processing steps of cleaning method for full-molds of vehicle tire as the subject of invention.

**REFERENCE NUMBERS**

| | |
|---|---|
| 1 Contaminated full-mold | 2 Depurated full-mold |
| 10 Ultrasonic cleaning a apparatus | 20 First cleaning station |
| 30 Cabinet | 40 Second cleaning station |
| 50 Cleaning liquid | 51, 52, 53 Ultrasonic device |
| 54 Basket | 60 Rinsing station |
| 61 Driving motor | 62 Circulation pump |
| 64 Pintle | 70 Pasivation istasyonu |
| 72 Jet | 80 Drying station |
| 82 Nozzle | |

### DETAILED DESCRIPTION OF THE INVENTION

The process steps of the application which is subject matter of the invention as an illustration of the cleaning method is shown in Figure 1 schematically. Accordingly, contaminated full-mold (1) is taken a pre-treatment with an ultrasonic cleaning apparatus (10), so movement of contamination by eliminating the dirt on full-molds that occurred in the valves at the air ventilation openings is achieved. From here, the full-mold (2) is taken into the first cleaning station (20) via dry ice blasting through a cabin (30). The period of the ultrasonic process is shortened on the second ultrasonic station (40) by providing elimination of coarse dirt and contamination via process of dry ice application. Thus, through increase in the contamination period, the usage efficiency of the cleaning liquid (50) of the bath having chemicals is increased. In the one embodiment of the invention, frequency of application increases in the same bath prepared at the second cleaning station (40).

Then the full-mold (2) is immersed into a basket (54) is situated in a a loaded tank with cleaning fluid (50) at the second cleaning station (40), and is cleaned by means of the ultrasonic device (51, 52, 53) are placed around the basket (54) which is actuated by a drive system. The dirth and contamination adhered on the surface are dissolved owing to the effect inside cleaning fluid (50) generated by the ultrasonic device (51, 52, 53) wherein the cleaning operation. Furthermore, the churning influence due to movable basket (54) during the cleaning of full-mold (2) provides removal of the contamination from the surface of the full-molds.

Besides, lower prices reduction is takes placed in the amount of cleaning liquid (50) containing waste water and waste chemicals discharged from the second cleaning station provides lower cost for the process. Likewise, providing this cost reduction also ecologically decreases the pollution of environment.

After the ultrasonic cleaning process at least one depurated full-mold (2) having profile preferably multiple depurated full-mold (2) having a profile is taken in to rinsing station (60) and is washed by spraying water from jet (64) by means of at least one motor (61). Meanwhile, usage of optimum amount of wash water is provided by means of water recirculation formed by a circulation pump (62). After this step, full-mold (2) is taken to a passivation station where spraying is employed from pintle nozzle(72), and finally in the drying station (80) where spraying hot air is employed from nozzles (82).

A preferred application of the invention has a microprocessor control unit is used for operating with adjusting the value amounts of the temperature, pressure, time, ultrasonic wave and movement in the stations (20, 40, 60, 70, 80). A preferred application of the invention has a PLC (Programmable Logic Controller) is used for operating with adjusting the value amounts of the temperature, pressure, time, ultrasonic wave and movement in the stations (20, 40, 60, 70, 80).

## Claims

1. A method for cleaning the vehicle tire full-molds having profile, comprising steps of
• pre-treatment of contaminated full-mold (1) by at least one ultrasonic cleaning apparatus (10),
• Re-cleaning of depurated full-mold (2) by dry ice process in first cleaning station (20)
• cleaning of the full-mold with a multiple number of ultrasonic devices (51, 52, 53) by immersing into a cleaning liquid (50) in second cleaning station (40),
• rinsing full-mold in rinsing station (60), via spraying from at least one jet (64)
• putting full mold in passivation station (70), and
• drying full mold in drying station (80).

2. A method according to claim 1, wherein cleaning of the depurated full-mold (2) is in an open environment for the pre-treatment

3. A method according to claim 1, wherein a microprocessor control unit operates the steps of process at the said cleaning stations (20, 40, 60, 70, 80) by adjusting the value amounts of the temperature, pressure, tinie, ultrasonic wave and movement.

4. A cleaning process according to anyone of the preceding claims, wherein a PLC program operates the steps of process at the said cleaning stations (20, 40,60,70, 80) by adjusting the value amounts of the temperature, pressure, time, ultrasonic wave and movement.

## Patentansprüche

1. Verfahren zum Reinigen der Fahrzeugreifen-Vollformen mit Profil, umfassend die Schritte von
• Vorbehandlung der verunreinigten Vollform (1) durch mindestens eine Ultraschallreinigungsvorrichtung (10),
• Nachreinigung der entschlackten Vollform (2) im Trockeneisverfahren in der ersten Reinigungsstation (20),
• Reinigen der Vollform mit einer Vielzahl von Ultraschallgeräten (51, 52, 53) durch Eintauchen in eine Reinigungsflüssigkeit (50) in einer zweiten Reinigungsstation (40),
• Spülen der Vollform in der Spülstation (60) durch Sprühen aus mindestens einer Düse (64)
• Einbringen der Vollform in die Passivierungsstation (70), und
• Trocknen der vollen Form in der Trocknungsstation (80).

2. Verfahren nach Anspruch 1, wobei die Reinigung der entschlackten Vollform (2) in einer offenen Umgebung für die Vorbehandlung erfolgt.

3. Verfahren nach Anspruch 1, wobei eine Mikroprozessorsteuereinheit die Verfahrensschritte an den Reinigungsstationen (20, 40, 60, 70, 80) durch Einstellen der Wertemengen von Temperatur, Druck, Zeit, Ultraschallwelle und Bewegung durchführt.

4. Reinigungsprozess nach einem der vorhergehenden Ansprüche, wobei ein PLC-Programm die Verfahrensschritte an den Reinigungsstationen (20, 40, 60, 70, 80) durch Einstellen der Wertemengen von Temperatur, Druck, Zeit, Ultraschallwelle und Bewegung durchführt.

## Revendications

1. Procédé pour nettoyer les moules pleins de pneus de véhicule ayant un profil, comprenant les étapes consistant à
• prétraitement d'un moule plein contaminé (1) par au moins un appareil de nettoyage par ultrasons (10),
• Re-nettoyage du moule plein dépuré (2) par un procédé de carboglace dans la première station de nettoyage (20)
• nettoyage du moule complet avec plusieurs appareils à ultrasons (51, 52, 53) par immersion dans un liquide de nettoyage (50) dans une deuxième station de nettoyage (40),
• rinçage complet dans la station de rinçage (60), par pulvérisation à partir d'au moins un jet (64)
• mise en place du moule complet dans la station de passivation (70), et
• séchage du moule complet dans la station de séchage (80).

2. Procédé selon la revendication 1, dans lequel le nettoyage du moule plein dépuré (2) se fait dans un environnement ouvert pour le prétraitement.

3. Procédé selon la revendication 1, dans lequel une unité de commande à microprocesseur commande les étapes de traitement auxdites stations de nettoyage (20, 40, 60, 70, 80) en ajustant les valeurs de la température, de la pression, de l'étainie, de l'onde ultrasonore et du mouvement.

4. Procédé de nettoyage selon l'une quelconque des revendications précédentes, dans lequel un programme PLC commande les étapes de processus auxdites stations de nettoyage (20, 40, 60, 70, 80) en ajustant les valeurs de température, pression, temps, onde ultrasonique et mouvement.
